Europäisches Patentamt

European Patent Office

Office européen des brevets

(11) Publication number: **0 076 120**
**B1**

(12) EUROPEAN PATENT SPECIFICATION

(45) Date of publication of patent specification: 25.03.87

(51) Int. Cl.⁴: **G 01 F 23/22**

(21) Application number: 82305055.4

(22) Date of filing: 24.09.82

(54) Current generating circuit device for measuring cryogenic liquefied gas liquid level meter with superconductive wire.

(30) Priority: 25.09.81 JP 142354/81

(43) Date of publication of application:
06.04.83 Bulletin 83/14

(45) Publication of the grant of the patent:
25.03.87 Bulletin 87/13

(84) Designated Contracting States:
CH DE FR GB LI NL

(56) References cited:
FR-A-1 442 111
US-A-3 943 767
US-A-4 118 984

PATENTS ABSTRACTS OF JAPAN, vol. 3, no.
94 (E-129), 10th August 1979, page 26 E 129

IBM TECHNICAL DISCLOSURE BULLETIN, vol.
18, no. 8, January 1976, page 2662, New York,
US, F. AINSCOW: "Pseudo-sinewave
generator"

(73) Proprietor: HOXAN CORPORATION
2, 1-chome, Nishi Kita-Sanjyo
Chuo-ku Sapporo-shi Hokkaido (JP)

(72) Inventor: Kuraoka, Yasuo c/o Hoxan-Laboratory
Hoxan Corp. 3-17, 2-chome, Gojyo Kikusui
Shiroishi-ku Sapporo-shi Hokkaido (JP)

(74) Representative: Crawford, Andrew Birkby et al
A.A. THORNTON & CO. Northumberland House
303-306 High Holborn
London WC2A 1AY (GB)

(56) References cited:
PROCEEDINGS OF THE INTERNATIONAL
CRYOGENIC ENGINEERING CONFERENCE,
Kyoto, 1974, pages 451-453, IPC Press, London,
GB, M. ISHIZUKA et al.: "P8 Continuous
superconducting level indicator for superfluid
helium"

## Description

This invention relates to a liquid level meter for cryogenic liquefied gas for measuring the liquid level by supplying a current to a superconductive wire and measuring the terminal voltage of the wire by utilizing the fact that, when the superconductive wire is dipped in a liquid helium, the liquid level of the helium is raised to cause the resistance of the wire to vary and, more particularly, to a current generating circuit device for supplying a predetermined measuring current to the superconductive wire of the liquid level meter.

The inventor of the present invention has already proposed a liquid level meter in US—A—4,118,984.

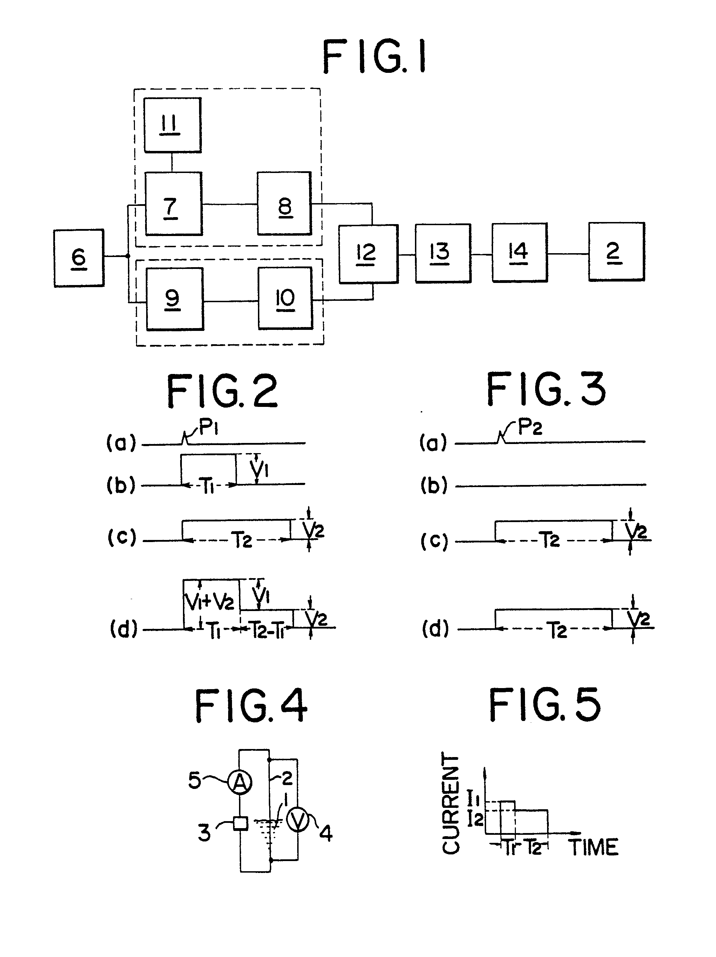

More particularly, as shown in present Figure 4, a current is supplied from a current supply unit 3 to a superconductive wire 2 which is dipped in cryogenic liquefied gas 1. When the terminal voltage of the wire 2 is measured by a voltmeter 4, a predetermined current is not only supplied from the current supply unit 3, but, as shown in Figure 5, a predetermined current $I_1$ is initially supplied to the wire 2, and when a period $T_1$ of time is thereafter elapsed, a predetermined current $I_2$ which is smaller than the current $I_1$ (as designated by an ammeter 5) is supplied to the wire in such a manner that the period $T_1$ of time for flowing the current $I_1$ is shorter than a predetermined period $T_2$ of time for flowing the current $I_2$.

In this manner, the liquid level of the liquid helium could be heretofore accurately measured in the normal pressure state. However, this method has a difficulty such that, when the evaporating velocity of the liquid helium is increased in reduced pressure state and when the liquid is in a superflowing state at the liquid surface, the resistance value of the superconductive wire largely depends upon the temperature, and irregular measured values may occur.

According to the present invention there is provided a current generating circuit device for a cryogenic liquefied gas liquid level meter comprising:
a trigger circuit,
a clock circuit driven by a trigger pulse from said trigger circuit for producing first and second clock outputs,
a high voltage generating circuit connected to the first output of said clock circuit for generating a voltage $V_1$ for a period $T_1$ of time determined by said clock circuit,
a low voltage generating circuit connected to the second output of said clock circuit for generating a voltage $V_2$ ($V_1 > V_2$) for a period $T_2$ ($T_1 < T_2$) of time determined by said clock circuit,
an adder circuit responsive to the outputs from both said voltage generating circuit,
a V/I converter circuit responsive to the output voltage of said adder circuit for producing a measuring current to a superconductive wire, and
a resetting circuit connected to said clock circuit for resetting the clock signal on said first output.

According to an embodiment of this invention there is provided a current generating circuit device for a cryogenic liquefied gas liquid level meter whereby the meter can accurately measure the liquid level of the liquid in reduced pressure, increased pressure and superflowing states.

The device advantageously eliminates the increase in heat loss by employing a stepwise current obtained merely by operating a resetting circuit.

Preferably the device can effectively obtain a measuring current for the liquid level meter.

The preferred embodiment of the invention will be apparent from the following description as an example only with reference to the accompanying drawings in which:
Figure 1 is a block diagram showing a preferred embodiment of a measuring current generating circuit device according to the present invention;
Figure 2 is an explanatory voltage waveform diagram showing the waveforms of the case of obtaining stepwise measuring current from the device of the present invention;
Figure 3 is an explanatory voltage waveform diagram showing the waveforms of the case of obtaining the measuring current of the same single pulse;
Figure 4 is an explanatory circuit diagram of the cryogenic liquefied gas liquid level meter; and
Figure 5 is a waveform diagram showing the measuring current supplied to a superconductive wire of the liquid level meter.

As shown in Figure 1 a trigger circuit 6 is connected to a first series circuit comprising a high voltage generating clock circuit 7 and a high voltage generating circuit 8, and to a second series circuit comprising a low voltage generating clock circuit 9 and a low voltage generating circuit 10, and the first and second series circuits are connected in parallel, and a resetting circuit 11 connected to the clock circuit 7 for controlling the ON and OFF of the clock circuit 7.

The output of the voltage generating circuits 8 and 10 are sequentially connected to an adder circuit 12. A voltage follower circuit 13, and a V/I converter circuit 14 are connected in series with the adder circuit 12, and the output of the converter circuit 14 is connected to a superconductive wire 2 of the liquid level meter for measuring the liquid level.

The operation of the measuring current generating circuit device thus constructed will now be described. When the high voltage generating clock circuit 7 is energized ON by the resetting circuit 11 to drive the trigger circuit 6, a trigger pulse $P_1$ shown in Figure 2(a) is applied to both the clock circuits 7 and 9. Thus, the high voltage generating circuit 8 generates a voltage having an amplitude $V_1$ shown in Figure 2(b) during a period $T_1$ of time set by the high voltage generating clock circuit 7. Further, the low voltage generating circuit 10 generates a voltage having an amplitude $V_2$ ($V_1 > V_2$) shown in Figure 2(c) during a period $T_2$ ($T_1 < T_2$) of time set by the low voltage generating clock circuit 9.

The voltages $V_1$, $V_2$ are then applied to the adder circuit 12, which adds the voltages $V_1$ and $V_2$ in amplitude as shown in Figure 2(d) to produce a stepwise voltage having an amplitude $(V_1 + V_2)$ for a duration $T_1$ and an amplitude $V_2$ for a duration $(T_2 - T_1)$, which is applied to the voltage follower circuit 13 which stabilizes the stepwise voltage and applies the voltage to the converter circuit 14. The converter circuit 14 produces corresponding stepwise measuring currents $(I_1, I_2)$ as shown in Figure 5, to be supplied to the superconductive wire 2.

When the resetting circuit 11 is again operated, the high voltage generating clock circuit 7 is deenergized OFF. Thus, a clock pulse $P_2$ shown in Figure 3(a) is generated from the trigger circuit 6. In this manner, as shown in Figure 3(b), no output voltage is produced from the clock circuit 7, but the voltage shown in Figure 3(c) is produced only from the low voltage generating circuit 10. Accordingly, the output waveform from the adder circuit 12 becomes as shown in Figure 3(d), with the result that the converter circuit 14 produces a measuring current corresponding to the voltage waveform shown in Figure 3(d) in the form of a single current pulse to be supplied to the superconductive wire 2.

It should be understood from the foregoing description that the measuring current generating circuit device for a cryogenic liquefied gas liquid level meter of the present invention is constructed with respect to the preferred embodiment and comprises: a trigger circuit 6, a high voltage generating clock circuit 7 driven by a trigger pulse from the trigger circuit 6, a low voltage generating clock circuit 9 driven by a trigger pulse from the trigger circuit 6, a high voltage generating circuit 8 connected to the clock circuit 7 for generating a voltage $V_1$ for a period $T_1$ of time determined by the clock circuit 7, and a low voltage generating circuit 10 connected to the clock circuit 9 for generating a voltage $V_2$ $(V_1 > V_2)$ for a period $T_2$ $(T_1 < T_2)$ of time determined by the clock circuit 9, an adder circuit 12 receiving the outputs from both the voltage generating circuits 8 and 10, a V/I converter circuit 14 receiving the output voltage of the adder circuit 12 for producing a measuring current to a superconductive wire 2, and a resetting circuit 11 connected to the high voltage generating clock circuit 7, a voltage having a predetermined amplitude for a predetermined period of time can be produced by the high voltage generating clock circuit 7 and the high voltage generating circuit 8, and a predetermined voltage for a predetermined period of time can simultaneously be produced by the low voltage generating clock circuit 9 and the low voltage generating circuit 10, both the voltages from the circuit 8 and 10 are added by the adder circuit 12, thereby effectively obtaining the measuring current of desired stepwise waveform and the current generating circuit device permits accurate measurement of the liquid level in the normal pressure, reduced pressure, increased pressure and superflowing states by the cryogenic liquefied gas liquid level meter, can obtain the single pulse measuring current by merely operating the resetting circuit 11, and accordingly eliminates the increase in the heat loss by employing the stepwise current, and can also efficiently and accurately measure the liquid level.

**Claims**

1. A current generating circuit device for a cryogenic liquefied gas liquid level meter comprising:

a trigger circuit (6),

a clock circuit (7, 9) driven by a trigger pulse from said trigger circuit for producing first and second clock outputs,

a high voltage generating circuit (8) connected to the first output of said clock circuit (7, 9) for generating a voltage $V_1$ for a period $T_1$ of time determined by said clock circuit (7, 9),

a low voltage generating circuit (10) connected to the second output of said clock circuit (7, 9) for generating a voltage $V_2$ $(V_1 > V_2)$ for a period $T_2$ $(T_1 < T_2)$ of time determined by said clock circuit (7, 9),

an adder circuit (12) responsive to the outputs from both said voltage generating circuits (8, 10),

a V/I converter circuit (14) responsive to the output voltage of said adder circuit (12) for producing a measuring current to a superconductive wire (2), and

a resetting circuit (11) connected to said clock circuit (7, 9) for resetting the clock signal on said first output.

2. A device as claimed in claim 1, wherein said adder circuit 12 produces a stepwise voltage having an amplitude $(V_1 + V_2)$ for a duration $T_1$ and an amplitude $V_2$ for a duration $(T_2 - T_1)$.

3. A device as claimed in claim 1 or 2, wherein the clock circuit comprises two separate clock circuits each for producing a respective one of said clock outputs and the resetting circuit is connected to the separate clock circuit (7) for producing a first clock output.

**Patentansprüche**

1. Stromerzeugungsschaltungsanordnung für einen Pegelmesser für durch Kälte verflüssigtes Gas, enthaltend:

eine Triggerschaltung (6),

eine Taktschaltung (7, 9), die von einem Triggerimpuls von der Triggerschaltung betrieben ist, um erste und zweite Taktausgänge zu erzeugen,

eine Hochspannungserzeugungsschaltung (8), die mit dem ersten Ausgang der Taktschaltung (7, 9) verbunden ist, um eine Spannung $V_1$ für eine Zeitdauer $T_1$ zu erzeugen, die durch die Taktschaltung (7, 9) bestimmt ist,

eine Niederspannungserzeugungsschaltung (10), die mit dem zweiten Ausgang der Taktschaltung (7, 9) verbunden ist, um eine Spannung $V_2$ $(V_1 > V_2)$ für eine Zeitdauer $T_2$ $(T_1 < T_2)$ zu erzeugen, die durch die Taktschaltung (7, 9) bestimmt ist,

eine Addierschaltung (12), die auf die Ausgänge der beiden Spannungserzeugungsschaltungen (8, 10) anspricht,

eine V/I-Wandlerschaltung (14), die auf die Ausgangsspannung der Addierschaltung (12) anspricht, um einen Meßstrom für einen supraleitenden Draht (2) zu erzeugen, und

eine Rücksetzschaltung (11), die mit der Taktschaltung (7, 9) verbunden ist, um das Taktsignal an dem ersten Ausgang rückzusetzen.

2. Anordnung nach Anspruch 1, bei der die Addierschaltung (12) eine stufenförmige Spannung erzeugt, die eine Amplitude $(V_1 + V_2)$ für eine Zeitdauer $T_1$ und eine Amplitude $V_2$ für eine Zeitdauer $(T_2 - T_1)$ hat.

3. Anordnung nach Anspruch 1 oder 2, bei der die Taktschaltung zwei getrennte Taktschaltungen enthält, jeweils zur Erzeugung je eines der Taktausgänge, und bei der die Rücksetzschaltung mit der getrennten Taktschaltung (7) zur Erzeugung des ersten Taktausgangs verbunden ist.

**Revendications**

1. Montage générateur de courant pour un appareil de mesure du niveau d'un gaz cryogène liquéfié, comprenant:

un circuit déclencheur (6),

un circuit rythmeur (7, 9) attaqué par une impulsion de déclenchement de ce déclencheur et destiné à produire un premier et un second signal de rythmeur,

un circuit (8) générateur d'une tension relativement haute, qui est connecté à une première sortie du circuit rythmeur (7, 9) et est destiné à générer une tension $V_1$ pendant une période $T_1$ déterminée par le circuit rythmeur (7, 9),

un circuit (10) générateur d'une tension relativement basse, qui est connecté à une deuxième sortie du circuit rythmeur (7, 9) et est destiné à générer une tension $V_2$ ($V_1 > V_2$) pendant une période $T_2$ ($T_1 < T_2$) déterminée par le circuit rythmeur (7, 9),

un circuit additionneur (12) qui additionne les signaux de sortie de deux circuits générateurs de tension (8, 10),

un circuit convertisseur tension/courant (14) qui convertit la tension de sortie du circuit additionneur (12) en un courant de mesure envoyé à un fil supraconducteur (2) et

un circuit de remise à zéro (11) connecté au circuit rythmeur (7, 9) et servant à la remise à l'état initial du signal de rythmeur sur la première sortie.

2. Montage selon la revendication 1, dans lequel le circuit additionneur (12) produit une tension en gradin, ayant une amplitude $(V_1 + V_2)$ pendant une durée $T_1$ et une amplitude $V_2$ pendant une durée $(T_2 - T_1)$.

3. Montage selon la revendication 1 ou 2, dans lequel le circuit rythmeur comprend deux circuits rythmeurs séparés, destinés chacun à produire l'un desdits signaux de rythmeur, et le circuit de remise à zéro est connecté au circuit rythmeur séparé (7) destiné à produire le premier signal de rythmeur.

# FIG.1

# FIG.2

# FIG.3

# FIG.4

# FIG.5